Europäisches Patentamt

European Patent Office

Office européen des brevets

(19)

(11) **EP 1 530 144 A2**

(12) **EUROPEAN PATENT APPLICATION**

(43) Date of publication:
**11.05.2005 Bulletin 2005/19**

(51) Int Cl.⁷: **G06F 17/60**

(21) Application number: **04105592.2**

(22) Date of filing: **08.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **07.11.2003 US 703085**

(71) Applicant: **SAP Aktiengesellschaft**
**69190 Walldorf (DE)**

(72) Inventors:
• **Dudat Olaf**
  **69115 Heidelberg (DE)**
• **Schierholt Hans Karsten**
  **Montreal QC H4A 2H6 (CA)**

(74) Representative: **Schramm, Michael, Dr. et al**
**Bettinger Schneider Schramm,**
**Patent- und Rechtsanwälte,**
**Postfach 86 02 67**
**81629 München (DE)**

(54) **Systems and methods for automatic selection of a forecast model**

(57) Systems and methods consistent with the present invention are provided for selecting a set of models, each of the set of models providing a forecast representative of a demand for a product. In one embodiment, a method includes receiving data representative of a past demand for the product; determining, in a sequence, whether the received data corresponds to at least one of one or more known demand patterns; and selecting the set of models based on the determined demand pattern, such that at least one of the models provides the forecast representative of the demand.

FIG. 9

EP 1 530 144 A2

**Description**

BACKGROUND OF THE INVENTION

I. Field of the Invention

[001] The present invention generally relates to data processing. More particularly, the invention relates to systems and methods for automatically selecting a forecast model, such as a model that forecasts demand.

II. Background and Material Information

[002] Planning is an integral part of any manager's job. Forecasting serves as a tool that permits managers to reduce uncertainty and develop meaningful plans to anticipate future demand. Specifically, forecasting answers the fundamental business question of: How many products can we expect to sell in the future, if a given amount was sold or used in the past? The answer to that question is a forecast of a product's demand.

[003] A forecast may be qualitative or quantitative. A qualitative forecast is based on mainly subjective inputs, such as personal opinions, surveys, and hunches. On the other hand, a quantitative forecast may analyze objective data, such as historical demand data for a product, using a forecast model. A simple forecast model may estimate a future demand as simply being equal to the demand in the past. For example, if 1000 units were sold last year, then 1000 units will be forecast for next year. Although this simplistic model may not be of sufficient value to a manager, there are a wide variety of known forecast models that facilitate planning, controlling, and executing a supply chain of a product. Specifically, a forecast may enable a user, such as a manager, to plan a product's supply chain including, for example, manufacturing of a product, ordering parts for the product, determining suppliers and required quantities, and/or determining schedules associated with manufacturing, shipping, and final delivery to a retailer (or an other source of demand). In short, a forecast can reduce shortages in the supply chain and, ultimately, reduce lost sales due to lack of product availability. As such, it is important to develop systems and methods that improve forecasting.

SUMMARY OF THE INVENTION

[004] Accordingly, the present invention is generally directed to data processing, and, more particularly, to systems and methods for automatically selecting a model that forecasts demand.

[005] In one embodiment, consistent with the present invention, systems and methods are provided for selecting a set of models, each of the set of models providing a forecast representative of a demand for a product. Moreover, systems and methods are provided for receiving data representative of a past demand for the product. Furthermore, systems and methods are provided for determining, in a sequence, whether the received data corresponds to at least one of one or more known demand patterns. In addition, systems and methods are provided for selecting the set of models based on the determined demand pattern, such that at least one of the models provides the forecast.

[006] According to another embodiment, consistent with the present invention, systems and methods are provided for selecting a set of models, each of the set of models providing a forecast representative of a demand for a product. Moreover, systems and methods are provided for receiving demand data representative of a past demand for the product. Furthermore, systems and methods are provided for configuring a sequence for testing one or more known demand patterns, and determining, in accordance with the configured sequence, whether the received data represents at least one of the known demand patterns. In addition, systems and methods are provided for selecting, based on the determined known demand pattern, a set of models, the set of models including at least a first model and a second model. Further, systems and methods are provided for determining first forecast data based on the first model and the received demand data; determining second forecast data based on the second model and the received demand data; and selecting one of the first forecast data or the second forecast data, such that the selected forecast data is utilized to provide the forecast.

[007] It is to be understood that both the foregoing general description and the following detailed description are exemplary and explanatory only and are not restrictive of the invention, as described. Further features and/or variations may be provided in addition to those set forth herein. For example, the present invention may be directed to various combinations and subcombinations of the disclosed features and/or combinations and subcombinations of several further features disclosed below in the detailed description.

BRIEF DESCRIPTION OF THE DRAWINGS

[008] The accompanying drawings, which are incorporated in and constitute a part of this specification, illustrate various embodiments and aspects of the present invention and, together with the description, explain the principles of the invention. In the drawings:

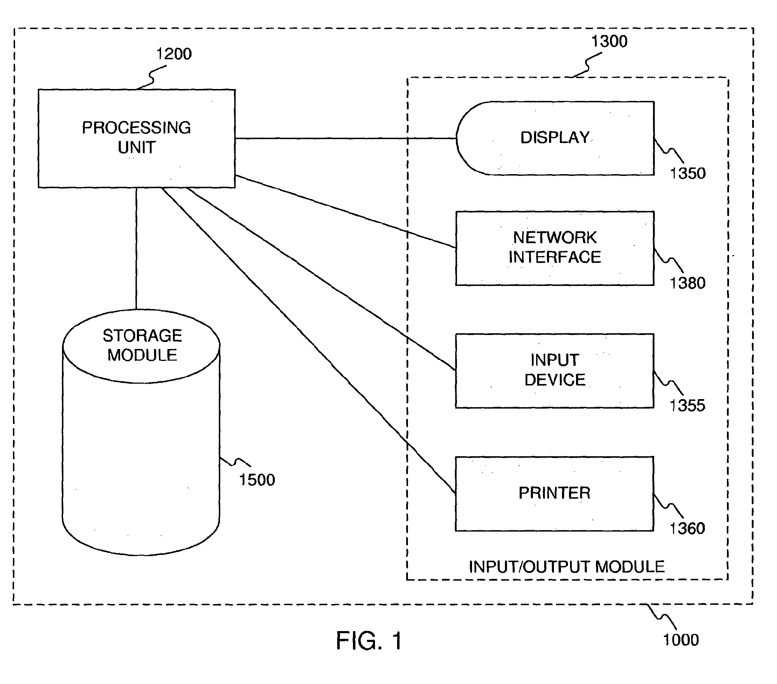

[009] FIG. 1 illustrates an exemplary system environment, in accordance with systems and methods consistent with the present invention;

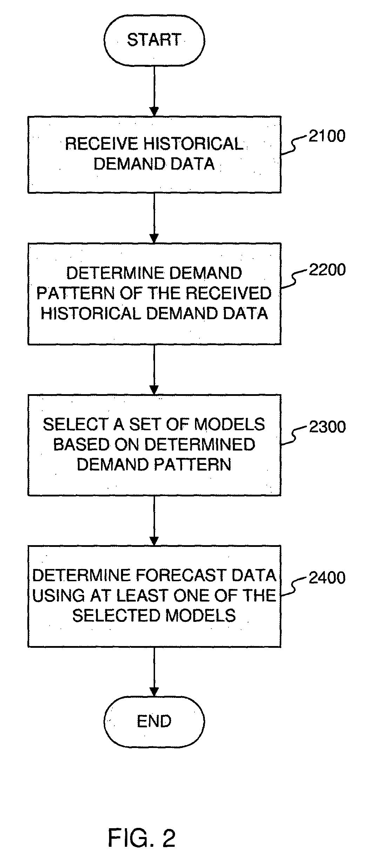

[010] FIG. 2 is an exemplary flowchart depicting steps for selecting a set of models based on a demand pattern, in accordance with systems and methods consistent with the present invention;

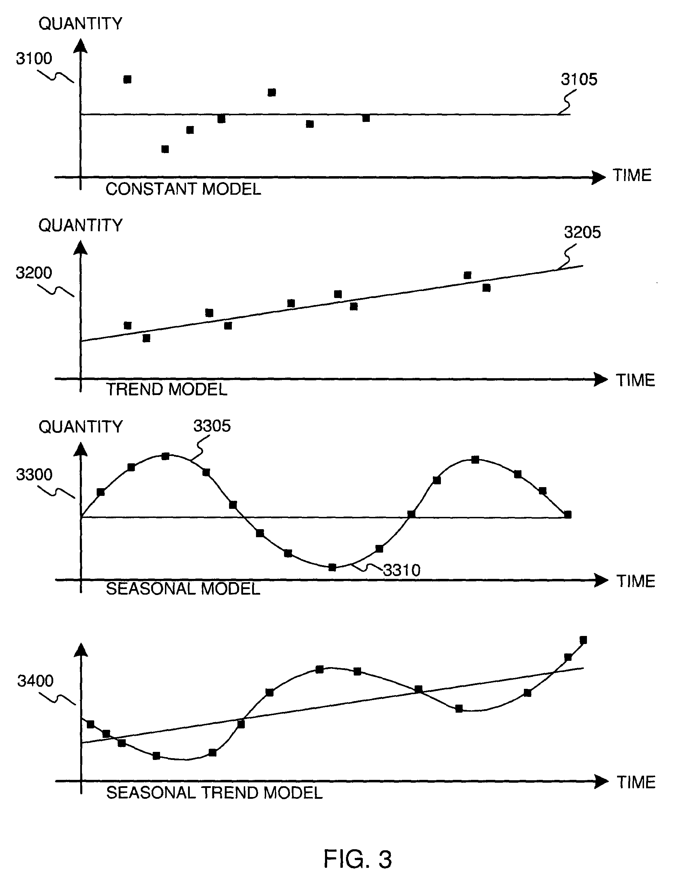

[011] FIG. 3 illustrates exemplary demand patterns, in accordance with systems and methods consistent with the present invention;

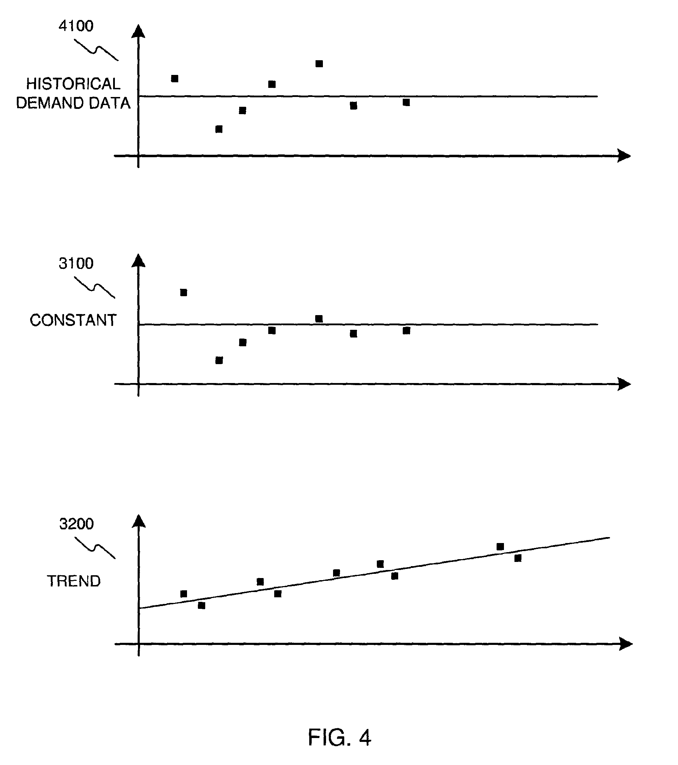

[012] FIG. 4 illustrates a plot of historical demand data and two plots of exemplary demand patterns, in accordance with systems and methods consistent with the present invention;

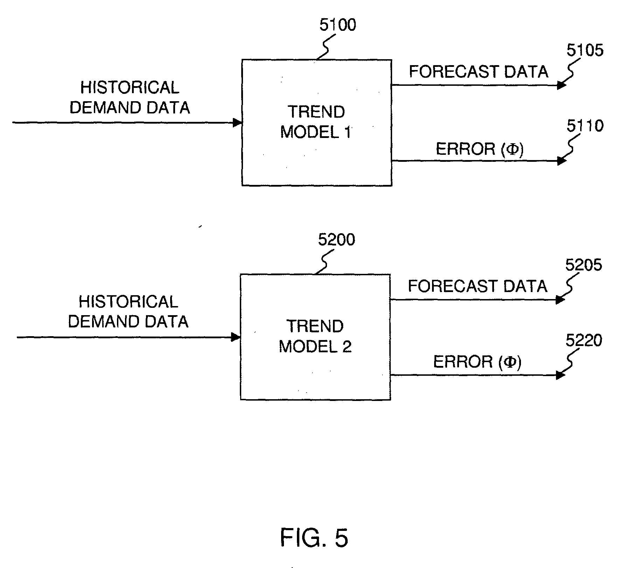

[013] FIG. 5 illustrates two forecast models, in accordance with systems and methods consistent with the present invention;

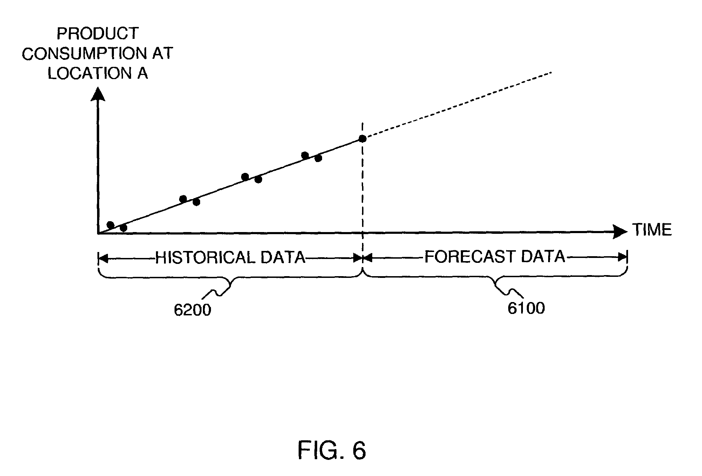

[014] FIG. 6 illustrates a plot of historical demand data and extrapolated forecast data, in accordance with systems and methods consistent with the present invention;

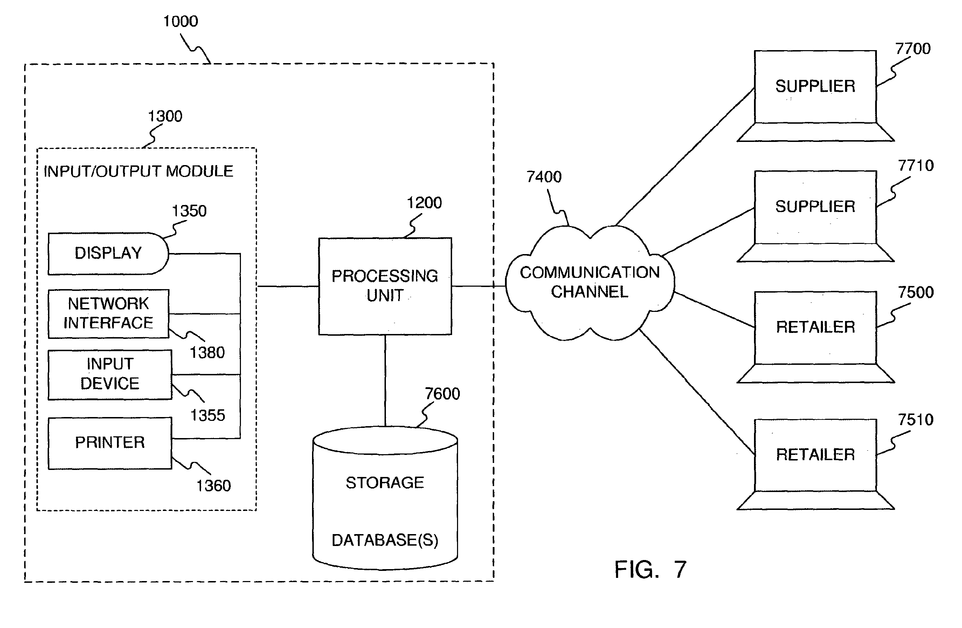

[015] FIG. 7 illustrates another exemplary system environment, in accordance with systems and methods consistent with the present invention;

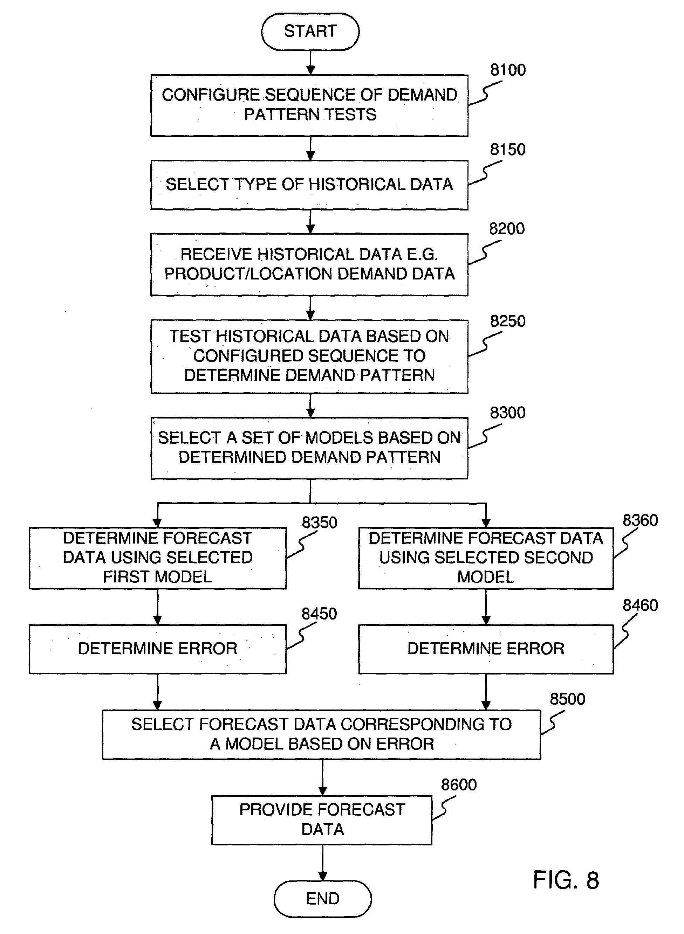

[016] FIG. 8 is another exemplary flowchart depicting steps for selecting a set of models based on a demand pattern, in accordance with systems and methods consistent with the present invention; and

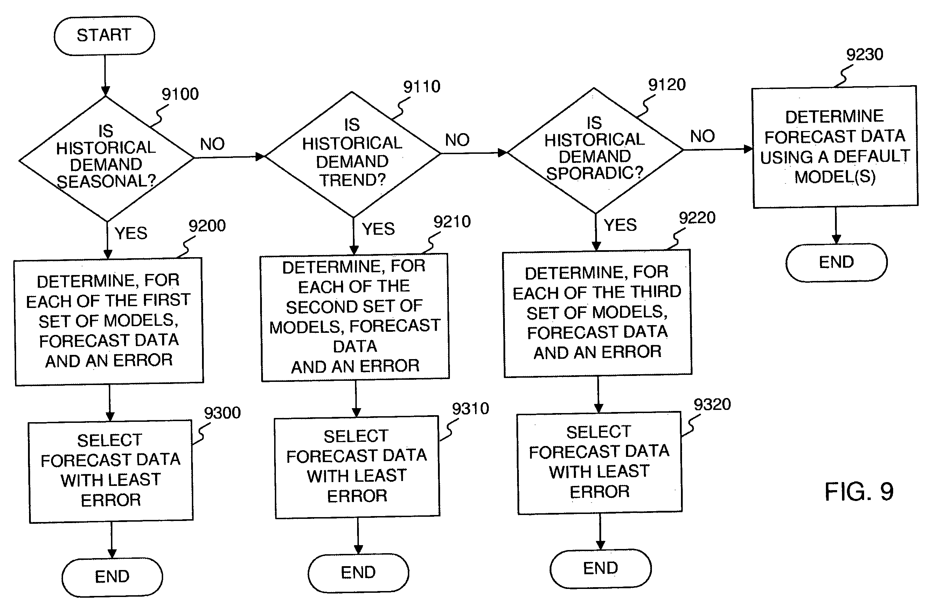

[017] FIG. 9 illustrates an exemplary flowchart depicting a configured test sequence for analyzing demand patterns, in accordance with systems and methods consistent with the present invention.

DETAILED DESCRIPTION

[018] Reference will now be made in detail to the invention, examples of which are illustrated in the accompanying drawings. Wherever possible, the same reference numbers will be used throughout the drawings to refer to the same or like parts.

[019] In one embodiment consistent with the present invention, a data processor, such as a computer, receives historical demand data. Historical demand data may include any historical information that may be used to determine future demand. For example, historical demand data may include the quantity of products sold each month over a two-year period. The data processor may then determine whether the received historical demand data fits a known demand pattern, such as a constant demand pattern or a seasonal demand pattern. For example, the demand for a sweater may have a seasonal demand pattern, namely, the winter months. On the other hand, the demand for shirts may have a constant demand pattern, since buying patterns for shirts tend to remain relatively constant throughout the year. Once the demand pattern is determined, the data processor may then automatically select a set of forecast models to determine a demand forecast for the product, each model extrapolating demand for the product into the future. When more than one model outputs a demand forecast for the product, the data processor may select which one of the forecast demand data outputs to use by selecting an output associated with the least error. The data processor may then provide the forecast demand data to a user or another data processor.

[020] Although the embodiment above describes the use of the quantity of products sold as historical demand data, the historical demand data may also include one or more of the following: the quantity of installed products (also known as installed product base), the quantity of service calls, the frequency of maintenance calls, and other economic factors, such as gross domestic product and interest rates.

[021] A forecast of a product's demand enables all the entities associated with the supply chain of the product, for example, manufacturers, suppliers, distributors, and retailers, to plan for the predicted product demand. Moreover, automatic model selection may improve forecasting when compared to manual approaches. By using automatic forecast model selection, product shortages due to poor demand planning may be reduced—improving overall product sales volume. With the above general description, a more detailed description follows.

[022] FIG. 1 depicts an exemplary system environment comprising a data processor 1000 for implementing systems and methods consistent with the present invention. Referring to FIG. 1, FIG. 1 includes a processing unit 1200, a storage module 1500, and an input/output (I/O) module 1300. Moreover, data processor 1000 may be implemented, for example, by a PC, UNIX server, or mainframe computer for performing various functions and operations. Furthermore, data processor 1000 may be implemented, for example, by a general purpose computer or data processor selectively activated or reconfigured by a stored computer program, or may be a specially constructed computing platform for carrying-out the features and operations disclosed herein. In one embodiment, the data processor 1000 may be implemented as part of a planning system, such as the Advanced Planning and Optimization (APO) system available from SAP AG (Walldorf, Germany).

[023] The I/O module 1300 may include one or more input and/or output devices, such as a display 1350, a network interface 1380, an input device 1355, and a printer 1360. Network interface 1380 enables computer 1000 to communicate through a network. For example, network interface 1380 may be embodied as an Ethernet network interface card or a wireless LAN interface card, such as cards compatible with the IEEE 802.11 series of standards. Input device 1355 implemented with a variety of devices to receive a user's input and/or provide the input to processing unit 1200. Some of these input devices may include, for example, a keyboard and a mouse. Moreover, although I/O module 1300 is depicted as being co-located with processing unit 1200, I/O module 1300 (or devices therein) may be in a distance location connected to the processing unit 1200 through a network, such as a local area network or the Internet.

[024] Processing unit 1200 may include, for example, one or more of the following: a central processing unit, a co-processor, memory, registers, and other processing devices and systems as appropriate. Although Fig. 1 illustrates only a single processing unit 1200, computer 1000 may alternatively include a set of processing units.

[025] Storage module 1500 may be embodied with a variety of components or subsystems capable of providing storage including, for example, a hard drive, an optical drive, a general-purpose storage device, a removable storage device, and/or memory. Further, although storage module 1500 is illustrated in Fig. 1 as being separate or independent from data processing unit 1200, storage module 1500 and data processing unit 1200 may be implemented as part of a single platform or system.

[026] FIG. 2 is an exemplary flowchart depicting steps for automatically selecting forecast models, consistent with the present invention. Referring to FIGs. 1 and 2, data processor 1000 may receive historical demand data representative of demand for a product (step 2100). Data processor 1000 may then determine a demand pattern for the received historical demand data (step 2200) by fitting the demand pattern to one or more known demand patterns (step 2200). Data processor may then automatically select a model based on the determined demand pattern (step 2300). For example, if the demand pattern is determined to be a constant, the data processor 1000 may select one or more models for use with constant data. The historical demand data is then processed by data processor 1000 using each of the selected forecast models, providing respective outputs. To select which one of the forecast model outputs to use, data processor 1000 may then select the forecast data output associated with the model having the least error and provide the selected output to a user or another data processor (step 2400). The following provides a more detailed description of steps 2100-2400.

[027] To receive historical demand data representative of a demand for a product (step 2100), data processor 1000 may receive historical demand data in the form of sales data, such as point-of-sale (POS) information. The POS information may represent the quantity of products sold during a time period, such as daily, weekly, monthly, or yearly. Moreover, the historical demand data may be indicative of demand for other products. For example, POS information may represent the sales of shirts per month, but that information may further represent the product demand for buttons, cotton, thread, and any other materials required for the production and distribution of the shirt product. Alternatively, demand data may represent the manufacturing-side of demand. For example, a manufacturer may have historical demand data for automotive parts, which must be satisfied by automotive parts suppliers. In one embodiment, data processor 1000 may receive the historical demand information from network interface 1380, which receives the historical information from one or more sources of demand information, such as a database or retailer, through a network (not shown). Moreover, data processor 1000 may store the received historical demand information in storage module 1500.

[028] To determine a demand pattern for the received historical demand data (step 2200), data processor 1000 fits (or compares) the historical demand data to one or more known demand patterns (step 2200). For purposes of illustration, FIG. 3 shows four examples of known demand patterns. Referring to FIG. 3, a demand pattern may be constant 3100 over time, i.e., the product demand remains substantially constant relative to an average 3105. Alternatively, a demand pattern may exhibit a particular trend over time. For example, a demand pattern may trend 3200 upward, which means that the demand for the product increases about a trend line 3205. Although FIG. 3 depicts an upward trend line, a skilled artisan will recognize that the demand pattern may trend downward. The demand pattern may, alternatively, have a seasonal demand pattern 3300. For example, the product demand may peak for part of the year (labeled 3305) and reach a low (or trough) for another part of the year (labeled 3310). For example, the demand for sweaters may be seasonal with a peak 3305 during the winter and a trough during the summer 3310. A skilled artisan will recognize that a demand pattern may represent a historical (or past) demand for a product using various forms, such as an equation, curve, function, or template. A skilled artisan will also recognize that any other known demand patterns may be used instead, for example, a seasonal with and upward demand trend, a seasonal with a downward trend, a sporadic demand pattern (also referred to as a Intermittent), an exponential distribution, such as declining growth and inclining growth).

[029] The data processor 2200 may then compare the historical demand data to one or more known demand patterns and select the known demand pattern that best fits the historical demand data. The known demand pattern with the best fit may be determined based on various known statistical techniques including, for example, determining a minimum deviation (e.g., mean or least squared error) between the known demand pattern and the historical demand data. As will be appreciated by the skilled artisan, other statistical techniques and approaches may be used to determine the demand pattern that best fits the historical demand data.

[030] To illustrate the use of a minimum deviation approach, FIG. 4 depicts historical demand data 4100 and two exemplary known demand patterns, namely, constant 3100 and trend 3200. Referring to FIG. 4, a visual inspection reveals that the historical demand data 4100 is almost identical to constant demand pattern 3100—resulting thus in a relatively low deviation. As such, if a deviation is determined for historical demand data 4100 and the known constant demand pattern 3100, the deviation will be lower when compared to a deviation calculated for the historical demand data 4100 and the very different, trend demand pattern 3200. A skilled artisan will recognize that the known demand pattern with the best fit may be determined using a variety of statistical techniques and tests including, for example, a means squared error, a least squared error, a correlation, a Kolmogorov-Smirnov goodness of fit test, mean absolute error (MAD), student t-test for two samples, autocorrelation tests, and correlation coefficient.

[031] Referring again to FIG. 2, in one embodiment, once a demand pattern is determined for the historical demand data, a set of models may be automatically selected based on the determined demand pattern (step 2300). For example, a user of data processor 1000 may define a first set of models if the demand pattern is constant and define another set of models if the demand pattern is seasonal.

[032] By way of example, FIG. 5 depicts a set of models that includes two models. In one embodiment, the two models are automatically selected for use with the historical demand data representative of a trend demand pattern. In the exemplary embodiment of FIG. 5, the historical demand data serves as an input to a first trend model 5100. The outputs of first trend model 5100 are forecast data 5105 and an error value 5110. Forecast data 5105 represents the projected demand for the product. Error value 5110 represents an error, such as a variance or standard deviation, associated with first trend model 5100 and provides an indication of the quality (or reliability) of first model 5100 and forecast data 5105. The historical demand data also serves as an input to a second trend model 5200. The outputs of second trend model 5200 are forecast data 5205 and an error value 5220. In one embodiment, a user of data processor 1000 defines which models are used for each demand pattern, so that the models are automatically selected once the demand pattern is determined.

[033] The first trend model 5100 may be embodied as a linear regression forecast model, while the second trend model may be embodied as an exponential smoothing forecast model. In one embodiment, a linear regression model estimates a straight-line equation through a set of data points. When used to forecast demand, the linear regression model extrapolates future demand by extending the straight-line equation. The second trend model 5200 may use exponential smoothing to extrapolate a forecast as a weighted average of the historical demand data values, with more weight given to the more recent historical demand values and exponentially decreasing weight for earlier historical values. Models that determine linear regression and exponential smoothing are known and commercially available. Moreover, a skilled artisan will recognize that any other forecasting model may be used instead including, for example, a least squares regression, a multiple linear regression, a Winter's Model, a Croston's Model, a first-order exponential smoothing, a moving average, a weighted moving average, a second-order exponential smoothing, and a median method. In one embodiment, data processor 1000 uses a Croston's Model, as one of the models in the set of models, when there is a sporadic demand pattern to the received historical demand data, i.e., when there is intermittent historical demand data or many time periods having little or zero demand.

[034] Data processor 1000 may select the forecast data output that has the least error and provide the corresponding forecast data to a user or another data processor (step 2400). In one embodiment, for each of the models, a standard deviation is determined based on the forecast data output. The standard deviation represents the error associated with the forecast data. Data processor 1000 then selects the forecast data output with the least standard deviation.

[035] By way of a non-limiting example, FIG. 6 depicts an exemplary plot of historical demand data 6200 and corresponding forecast data 6100. Referring to FIG. 6, the forecast data 6100 extrapolates future demand based on historical data. Moreover, a user of data processor 1000 may perform further planning based on the extrapolated forecast demand data 6100.

[036] FIG. 7 depicts another exemplary system environment consistent with the systems and methods of the present invention. Referring to FIG. 7, data processor 1000 includes storage module 1500 modified to include a database 7600. In addition, data processor 1000 connects to a plurality of suppliers 7700-7710 and retailers 7500-7510 through a communication channel 7400.

[037] Communication channel 7400 may be embodied as any type of communication medium or network and may include, alone or in any suitable combination, a telephony-based network, a local area network (LAN), a wide area network (WAN), a dedicated intranet, the Internet, a wireless network, or a bus. Further, any suitable combination of wired and/or wireless components and systems may be incorporated into the communication medium.

[038] The retailers 7500-7510 may include a computer or data processor. Moreover, retailers 7500-7510 may include any entity capable of providing information representative of product demand and/or receiving the resulting product demand forecast. The product demand information may further include location information. For example, since a retailer in Florida may have a different demand pattern for sweaters than a retailer in Minnesota, the Florida retailer's historical demand data may include location information, namely, product sold in Florida.

[039] Suppliers 7700-7710 may include a computer or data processor. Further, suppliers 7700-7710 may include any entity capable of supplying products (or components required in the manufacturing of the product) and/or receiving the resulting product demand forecast. Returning to the sweater example, a supplier may be the supplier of a sweater ready for sale at a retail outlet. Alternatively, a supplier may also be a supplier of the component materials used in manufacturing the sweater, such as a supplier of yarn, thread, or buttons. Although FIG. 7 depicts retailers 7500-7510 and suppliers 7700-7710, other sources of demand information may be used instead including, for example, a user that orders parts, such as a service technician.

[040] Database 7600 may store POS information, such as information received from retailers 7500-7510, suppliers 7700-7710, or any other source of demand information. The POS information may serve as a product's historical demand information. Moreover, database 7600 may receive historical demand information from any other source, including public databases that provide such demand information. Furthermore, database 7600 may store one or more known demand patterns and one or more sets of forecast models for extrapolating a demand for a product given the historical demand information. In one embodiment, database 7600 is part of a planning system, such as an APO system of SAP AG, which allows clients, such as a retailer 7500 or supplier 7700, to access data processor 1000 and extrapolate the demand forecast of a product, consistent with the systems and methods of an embodiment of the present invention.

[041] FIG. 8 depicts another exemplary flowchart that depicts steps for automatically selecting forecast models. Referring now to FIGs. 7 and 8, processor 1000 may configure a test sequence for the demand patterns (step 8100). Moreover, processor 1000 may select the type and/or source of historical demand data to be processed (step 8150). Processor 1000 may then receive historical demand data (step 8200). As indicated above, the historical demand data may include demand data that contains product and location information. With the historical demand data, processor 1000 determines the demand pattern by testing, in the sequence selected in step 8100, the historical demand data against the known demand patterns (step 8250). Once the demand pattern is determined, processor 1000 selects a set of forecast models to process the historical demand data (step 8300). The set of forecast models may comprise one or more selected forecast models. In the exemplary embodiment of FIG. 8, two forecast models are shown as being analyzed by processor 1000. Specifically, processor 1000 processes the received historical demand data using a first selected forecast model, which results in an output of forecast data (step 8350). Processor 1000 may further process the received historical demand data using a second selected forecast model, which results in another output of forecast demand data (step 8360). Processor 1000 may determine an error associated with each of the first and second models (steps 8350 and 8360) and then select between the two forecast data outputs based on the respective error values (steps 8450-8500). For example, processor 1000 may select the forecast data output associated with the model having the least error. The selected forecast data is then provided to a processor for display, storage, and/or further processing, such as additional planning activities.

[042] To configure a test sequence of the demand patterns (step 8100), a user of data processor 1000 may be prompted to select a test sequence. For example, a user may be prompted on display 1350 to enter the order in which the demand patterns should be tested. The user may thus select that the first test should determine whether the historical demand data fits a constant model, the second test should determine whether the historical demand data fits a seasonal model, and so forth. In one embodiment, the use of a test sequence reduces overall processing time because demand pattern testing stops once the correct demand pattern test is found. For example, if the historical demand data fits a constant demand pattern, data processor 1000 does not test the other demand patterns.

[043] FIG. 9 depicts an exemplary test sequence configured by a user of data processor 1000. Referring to FIG. 9, the user has configured a test sequence that analyzes the fit of the historical demand data using the following test sequence: test for a seasonal demand pattern (step 9100), test for a trend demand pattern (step 9110), and test for a sporadic (or Poisson) demand pattern (step 9120). Specifically, if the historical demand data fits a seasonal demand (step 9100), data processor 1000 determines forecast data and an error value for each model in a first set of models (step 9200), and selects the forecast data with the least error (step 9300), which is then provided to a user (or another processor) as the forecast. Returning to step 9100, if the historical demand data does not fit a seasonal pattern (i.e., the seasonal test fails), data processor 1000 analyzes the historical demand data to determine whether it fits a trend demand pattern (step 9110). If so, data processor 1000 determines forecast data and an error value for each model in a second set of models (step 9210), and then selects the forecast data with the least error (step 9310). If the historical demand does not fit a trend demand pattern (no at step 9120), data processor 1000 analyzes the historical demand data to determine whether it fits a sporadic demand pattern (step 9120). If so, data processor 1000 determines forecast data and an error value for each model in a third set of models (step 9220), and then selects forecast data with the least error (step 9320). FIG. 9 also depicts that the user of data processor 1000 configured a default model(s) if all three demand pattern tests (steps 9100-9120) fail to find a fit.

[044] Referring again to FIG. 8, a user of data processor 1000 may also select the type or source of historical demand data to be processed (step 8150). The type or source of historical demand data may be selected through various criteria, specified alone or in any combination. For example, to select the type of data, the user may specify a product on which to forecast demand. Similarly, the user may specify the source of the product information, for example, retailers 7500-7510, suppliers 7700-7710, or database 7600. The user may also specify a location. For example, a user may select the product type as sweaters, the source as retailer 7500, and the location as products sold in Florida. In addition, the user may specify a time period, for example, sales of sweaters during the past two years.

[045] Data processor 1000 may then receive the historical demand data (step 8200) from a source of such information, such as retailers 7500-7510, suppliers 7700-10, or database 7600. In one embodiment, whenever a product is sold, retailer 7500 may store, either locally or in database 7600, historical data representative of the demand of the product including transaction details, such as product type, location of sale, and date of sale. Moreover, the stored data may be sorted based on time, for example, by day, week, or month.

[046] To provide an illustration, Table 1 below depicts an example of historical demand data. In Table 1, the product and location are sweaters sold in Minnesota between the months of January and December.

Table 1:

| Exemplary Historical Demand Data | | | | | | | | |
|---|---|---|---|---|---|---|---|---|
| | JAN | FEB | MAR | ... | JULY | AUG | ... | DEC |
| Quantity of sweaters sold in Minnesota by Retailer A. | 100 | 90 | 80 | ... | 2 | 2 | ... | 110 |

[047] To determine the demand pattern (step 8250), data processor 1000 may compare the historical demand data (or part of the historical demand data) to one or more known demand patterns based on the configured test sequence. As noted above, FIG. 3 depicts examples of known demand patterns for constant, trend, seasonal, and seasonal trend. To compare a known demand pattern with a product's historical demand data, data processor 1000 may perform a correlation to determine whether the historical demand data fits one of the known demand patterns. Moreover, as stated above, the correlation may be performed in the sequence selected by the user in step 8100.

[048] To test whether the historical demand data fits a seasonal pattern, in one embodiment, data processor 1000 receives at least twenty-four months (two years) of historical demand data. Next, data processor 1000 tests the historical demand data by performing an autocorrelation test over the twenty-four month time period to determine whether there is a significant correlation pattern between the first twelve months and the second twelve months. For example, if there is a seasonal demand pattern, the demand for a product during December of the first twelve months should correlate with the demand for the product during December of the following twelve months. By way of example, the autocorrelation test may be determined using the following equation:

$$r = \frac{\left(12 * \sum x_i y_i\right) - \left(Year_1 * Year_2\right)}{\sqrt{\left(12 * \sum x_i^2 - Year_1^2\right) * \left(12 * \sum y_i^2 - Year_2^2\right)}} \qquad \text{EQUATION 1,}$$

where $x_i$ represents the most recent twelve months of historical demand data; $y_i$ represents the previous twelve months of data; $Year_1$ represents the total (or sum) of the demand values for the of the most recent year; and $Year_2$ is the total demand of the previous year. If $r$ is greater than a threshold value, the historical demand pattern is seasonal. The threshold value may be set, so that the seasonal demand pattern is detected with some degree of confidence.

[049] To test whether the historical demand data fits a trend pattern, data processor 1000 determines whether twenty-four months of the historical demand data are more likely to represent a constant demand (having a zero slope value) or more likely to have a trend demand (having a non-zero, positive or negative slope value). Specifically, data processor 1000 calculates a sloped line through the twenty-four months of historical demand data by using, for example, a linear regression that fits a line through the historical demand data. Next, data processor 1000 calculates a horizontal line having a zero slope through the twenty-four months of historical demand data. Data processor 1000 then calculates a mean squared error between the sloped line and the historical demand data, and another mean squared error between the horizontal line and the historical demand data. If the mean squared error associated with the sloped line is a lower than the other mean squared error associated with the horizontal line, the historical demand data is sloped—representing thus a trend demand pattern. Otherwise, the historical demand data is more likely to be a constant demand pattern.

[050] A skilled artisan will understand that there are various statistical techniques to determine whether a data distribution, such as the historical demand data, fits another data distribution, such as a known demand pattern. For example, data processor 1000 may determine a least squared error between the historical demand data and a known demand pattern. When the value of the least squared error is below a predetermined threshold, the historical demand data fits the known demand pattern.

[051] In one embodiment, a user may also select various preconditions that must be satisfied before selecting a model. For example, a user may select, as a precondition, that the historical demand data include one or more of the following: non-zero data values for each month, a maximum (or minimum) value for each month, and a maximum number of months with zero values. Moreover, a user may select other preconditions, such as using a Croston's model, which is a known forecast model and is commercially available, when there are large quantities of time periods (or months) in the historical demand data with zero values. In addition, a user may select, as a precondition, that a minimum of twenty-four months of historical demand data be stored in database 7600 before testing for seasonal demand patterns. Furthermore, the user may select to preprocess the historical demand data by eliminating outlier data values or by smoothing the data with a moving average filter.

[052] Based on the demand pattern determined in step 8250, data processor 1000 may select a set of forecast models. For example, if the demand pattern for the historical demand data is suspected to be a trend pattern, data processor 1000 may select a set of models for processing a trend demand (step 8300). These models may be defined, selected, and/or customized by a user for processing trend data. In one embodiment, a user defines or selects which set of models should be used given a determined demand pattern.

[053] In the case of a trend model, data processor 1000 may forecast the product demand by fitting a line (e.g., using linear regression) through twenty-four months of historical demand data. Data processor 1000 may then determine a mean absolute deviation (MAD) between each of the values of the historical demand data and the corresponding values of the fitted line. To compute the MAD, data processor 1000 determines a difference value between each point in the historical demand data and the fitted line. Next, data processor 1000 may calculate an average of the difference values, and a standard deviation of the difference values. The fitted line is then extrapolated (or extended) to one or more future time periods, e.g., months. FIG. 6 depicts a fitted line through the historical demand data 6200 and the extended trend line 6100. Referring to FIG. 6, the extended trend line 6100 represents the extrapolated future demand for the product based on a forecast model, in this case a linear regression model, and the received historical demand data (step 8350).

[054] Another forecast model may be also be used to determine a forecast data output (step 8360). In one embodiment, the second model may be an exponential smoothing model, which is known and commercially available. The exponential smoothing model extrapolates a demand forecast from the historical demand data. Specifically, the extrapolated forecast is a weighted average of the historical demand values with more weight given to more recent historical demand values, while exponentially decreasing weights for older historical values. By way of example, an exponential smoothing model may be of the following form:

$$F(t+1) = F(t) + alpha * [Y(t) - F(t)] \qquad \text{EQUATION 2,}$$

where F(t) represents the forecast at time t, Y(t) represents the latest observation (or actual demand) at time t, F(t+1) represents the forecast for the next time period (i.e., t+1), and alpha represents a smoothing factor. In one embodiment, the smoothing factor was equal to a value of about 0.3, although other smoothing factors may be used instead.

[055] A skilled artisan will recognize that any other forecasting model, which is known and commercially available, may be used instead of the examples provided, including a second order exponential smoothing model, a moving average forecast model, a Winter's model, and a Croston's Model. Moreover, a skilled artisan will recognize that commercial models may be modified and defined by a user.

[056] To determine an error value (or metric) for the model (steps 8450-8460), data processor 1000 may determine an error associated with each of the forecast models. For example, in the case of a trend, the standard deviation (described above) may be used to determine the quality of the model's answer. Alternatively, data processor 1000 may assess the quality of a model's output by calculating a standard deviation of the forecast data output. A skilled artisan will recognize that other error metrics of forecast quality representative of a model's quality may be used including, for example, a weighted error measure, a trend parameter, and a seasonality constraint (e.g., a season may not consists of twelve months).

[057] When a set of models is used, data processor 1000 may then determine which of the forecast data outputs to provide to a user (or another processor). In one embodiment, data processor 1000 selects the forecast data output with the least error (step 8500). Returning to the above example, data processor may select the forecast data output from the model with the lowest standard deviation with respect to the MAD. The selected forecast data may then be provided to a processor for display, storage, and/or further processing, such as additional product planning activities.

[058] Consistent with the present invention, the above references to sweaters and automotive parts are merely exemplary and do not limit the types of products or items for which forecasting may be performed. Accordingly, the above-noted examples should be treated only as illustrations and in no way be treated to limit the scope of the invention claimed herein.

[059] The systems disclosed herein may be embodied in various forms including, for example, a data processing unit, such as a computer that also includes a database. Moreover, the above-noted features and other aspects and principles of the present invention may be implemented in various environments. Such environments and related applications may be specially constructed for performing the various processes and operations of the invention or they may include a general-purpose computer or computing platform selectively activated or reconfigured by code to provide the necessary functionality. The processes disclosed herein are not inherently related to any particular computer or other apparatus, and may be implemented by a suitable combination of hardware, software, and/or firmware. For example, various general-purpose machines may be used with programs written in accordance with teachings of the invention, or it may be more convenient to construct a specialized apparatus or system to perform the required methods and techniques.

[060] Systems and methods consistent with the present invention also include computer readable media that include program instruction or code for performing various computer-implemented operations based on the methods and processes of the invention. The media and program instructions may be those specially designed and constructed for the purposes of the invention, or they may be of the kind well known and available to those having skill in the computer software arts. Examples of program instructions include, for example, machine code, such as produced by a compiler, and files containing a high level code that can be executed by the computer using an interpreter.

[061] Accordingly, it is intended that the specification and examples be considered as exemplary only, with a true scope and spirit of the invention being indicated by the following claims and their full scope of equivalents.

**Claims**

1. A method for selecting a set of models, each of the set of models providing a forecast representative of a demand for a product, the method comprising:

   • receiving data representative of a past demand for the product;

   • determining, in a sequence, whether the received data corresponds to at least one of one or more known demand patterns; and

   • selecting the set of models based on the determined demand pattern, such that at least one of the models provides the forecast.

2. The method of claim 1, wherein determining further comprises using, as the sequence, a predetermined sequence.

3. The method of claim 1, further comprising configuring the sequence.

4. The method of claim 1, wherein receiving comprises receiving, as data, a name identifying the product, a date when the product was sold, and a location representative of where there was demand for the product.

5. The method of claim 4, further comprising using, as the location, where the product was sold.

6. The method of claim 4, wherein receiving further comprises receiving the data from a source of demand.

7. The method of claim 6, further comprising using, as the source of demand, a retailer.

8. The method of claim 1, wherein determining comprises comparing the received data to one or more known demand patterns.

9. The method of claim 8, wherein comparing comprises using, as one of the known demand patterns, a demand pattern representative of a trend.

10. The method of claim 9, wherein using comprises using an upward trend, as the trend.

**11.** The method of claim 8, wherein comparing comprises using a correlation to compare the received data to the one or more known demand patterns.

**12.** The method of claim 1, wherein selecting comprises selecting the set of models, when the demand pattern represents a trend.

**13.** The method of claim 8, wherein selecting further comprises selecting another set of models, when the demand pattern represents a seasonal demand.

**14.** The method of claim 13, wherein selecting another set of models comprises selecting another set of models, such that at least one of the models in the other set of models is different than each of the models in the set of models.

**15.** The method of claim 1, wherein selecting further comprises selecting one of the set of models to provide the forecast based on an error value of the selected model.

**16.** A method for selecting a set of models, each of the set of models providing a forecast representative of a demand for a product, the method comprising:

- receiving demand data representative of a past demand for the product;

- configuring a sequence for testing one or more known demand patterns;

- determining, in accordance with the configured sequence, whether the received data represents at least one of the known demand patterns;

- selecting, based on the determined known demand pattern, a set of models, the set of models including at least a first model and a second model;

- determining first forecast data based on the first model and the received demand data;

- determining second forecast data based on the second model and the received demand data; and

- selecting one of the first forecast data or the second forecast data, such that the selected forecast data is utilized to provide the forecast.

**17.** The method of claim 16, wherein receiving comprises receiving, as demand data, a name identifying the product, a date when the product was sold, and a location representative of there was demand for the product.

**18.** The method of claim 16, wherein configuring the sequence further comprises prompting a user for the sequence.

**19.** The method of claim 16, wherein configuring further comprises prompting a user to first select at least one of the following demand patterns: constant, trend, and seasonal.

**20.** The method of claim 16, wherein determining in accordance with the configured sequence comprises using a correlation to compare the received demand data to the one or more known demand patterns.

**21.** The method of claim 16, wherein determining in accordance with the configured sequence comprises using a statistical test to determine whether the received demand data fits a seasonal demand pattern.

**22.** The method of claim 21, wherein using the statistical test further comprises using, as the statistical test, an autocorrelation.

**23.** The method of claim 21, wherein using the statistical test further comprises using, as the statistical test, a t-test.

**24.** The method of claim 16, wherein determining in accordance with the configured sequence comprises determining an equation representative of a line through the received demand data.

**25.** The method of claim 24, wherein determining the equation comprises determining that the demand pattern is a trend pattern based on a slope.

26. The method of claim 16, wherein selecting the set of models comprises selecting, automatically, the set of models.

27. The method of claim 16, wherein selecting the set of models comprises selecting, automatically, the set of models based on the determined demand pattern, such that a user defines which models should be included in the set of models.

28. The method of claim 16, further comprising configuring one or more conditions for selecting at least one of the set of models.

29. A system for selecting a set of models, each of the set of models providing a forecast representative of a demand for a product, the system comprising:

   • means for receiving data representative of a past demand for the product;

   • means for determining, in a sequence, whether the received data corresponds to at least one of one or more known demand patterns; and

   • means for selecting the set of models based on the determined demand pattern, such that at least one of the models provides the forecast.

30. A system for selecting a set of models, each of the set of models providing a forecast representative of a demand for a product, the system comprising:

   • means for receiving demand data representative of a past demand for the product;

   • means for configuring a sequence for testing one or more demand patterns;

   • means for determining, in accordance with the configured sequence, whether the received data represents at least one of the known demand patterns;

   • means for selecting, based on the determined known demand pattern, a set of models, wherein the set of models includes at least a first model and a second model;

   • means for determining first forecast data based on the first model and the received demand data and for determining second forecast data based on the second model and the received demand data; and

   • means for selecting one of the first forecast data or the second forecast data, such that the selected forecast data is utilized to provide the forecast.

31. A system comprising:

   • at least one memory comprising:

      - code that receives data representative of a past demand for a product;

      - code that determines, in a sequence, whether the received data corresponds to at least one of one or more known demand patterns; and

      - code that selects the set of models based on the determined demand pattern, such that at least one of the models provides the forecast; and

   • at least one processor for executing the code.

32. The system of claim 31, wherein code that receives comprises code that receives, as data representative of past demand, a name identifying the product, a date when the product was sold, and a location representative of where the product was sold.

**33.** The system of claim 31, wherein code that determines further comprises code that uses, as the sequence, a predetermined sequence.

**34.** The system of claim 31, further comprising code that configures the sequence.

**35.** The system of claim 32, wherein code that receives further comprises code that receives the data from a source of demand.

**36.** The system of claim 31, wherein code that determines comprises code that compares the received data to one or more known demand patterns.

**37.** The system of claim 36, wherein code that compares comprises code that uses, as one of the known demand patterns, a demand pattern representative of a trend.

**38.** The system of claim 37, wherein code that uses comprises code that uses an upward trend, as the trend.

**39.** The system of claim 36, wherein code that compares comprises code that uses a correlation to compare the received data to the one or more known demand patterns.

**40.** The system of claim 31, wherein code that selects comprises code that selects the set of models, when the demand pattern represents a trend.

**41.** The system of claim 40, wherein code that selects further comprises code that selects another set of models, when the demand pattern represents a seasonal demand.

**42.** The system of claim 41, wherein code that selects another set of models comprises code that selects another set of models, such that at least one of the models in the other set of models is different than each of the models in the set of models.

**43.** A system for selecting a set of models, each of the set of models providing a forecast representative of a demand for a product, the system comprising:

- at least one memory comprising:

  - code that receives demand data representative of a past demand for the product;

  - code that configures a sequence for testing one or more known demand patterns;

  - code that determines, in accordance with the configured sequence, whether the received data represents at least one of the known demand patterns;

  - code that selects, based on the determined known demand pattern, a set of models, the set of models including at least a first model and a second model;

  - code that determines first forecast data based on the first model and the received demand data and determines second forecast data based on the second model and the received demand data; and

  - code that selects one of the first forecast data or the second forecast data, such that the selected one is provided as the forecast; and

- at least one processor for executing the code.

**44.** The system of claim 43, wherein code that receives comprises code that receives, as demand data, a name identifying the product, a date when the product was sold, and a location representative of where the product was sold.

**45.** The system of claim 43, wherein code that configures the sequence comprises code that prompts a user for the sequence.

**46.** The system of claim 43, wherein code that configures the sequence comprises code that prompts a user to first select at least one of the following demand patterns: constant, trend, and seasonal.

**47.** The system of claim 43, wherein code that determines in accordance with the configured sequence comprises code that uses a correlation to compare the received demand data to the one or more known demand patterns.

**48.** The system of claim 43, wherein code that determines in accordance with the configured sequence comprises code that uses a statistical test to determine whether the received demand data fits a seasonal demand pattern.

**49.** The system of claim 43, wherein code that determines in accordance with the configured sequence comprises code that determines an equation representative of a line through the received demand data.

**50.** The system of claim 43, wherein code that determines the equation comprises code that determines that the demand pattern is a trend pattern based on a slope.

**51.** The system of claim 43, wherein code that selects the set of models comprises code that selects, automatically, the set of models.

**52.** The system of claim 43, wherein code that selects the set of models comprises code that selects, automatically, the set of models based on the determined demand pattern, such that a user defines which models should be included in the set of models.

**53.** A computer program product, the computer program product comprising code for implementing the steps of:

- receiving data representative of a past demand for a product;

- determining, in a sequence, whether the received data corresponds to at least one of one or more known demand patterns; and

- selecting the set of models based on the determined demand pattern, such that at least one of the models provides a forecast representative of the demand.

**54.** A computer program product for selecting a set of models, each of the set of models providing a forecast representative of a demand for a product, the computer program product comprising code for implementing the steps of:

- receiving demand data representative of a past demand for the product;

- configuring a sequence for testing one or more known demand patterns;

- determining, in accordance with the configured sequence, whether the received data represents at least one of the known demand patterns;

- selecting, based on the determined known demand pattern, a set of models, such that the set of models includes a first model and a second model;

- determining first forecast data based on the first model and the received demand data;

- determining second forecast data based on the second model and the received demand data; and

- selecting one of the first forecast data or the second forecast data, such that the selected one is provided as the forecast.

**55.** The computer program product of claim 54, further comprising prompting a user to select one or more models, as the set of models.

**56.** The computer program product of claim 54, further comprising using, as at least one of the models, a model defined by a user.

**57.** The computer program product of claim 54, further comprising prompting a user to select one or more statistical tests.

**58.** The computer program product of claim 54, further comprising prompting a user to select one or more predetermined comparisons, such that the comparisons enable selection of one of the first forecast data and the second forecast data.

FIG. 1

1300
1200 PROCESSING UNIT
1350 DISPLAY
1380 NETWORK INTERFACE
1355 INPUT DEVICE
1360 PRINTER
1000 INPUT/OUTPUT MODULE
1500 STORAGE MODULE

START

RECEIVE HISTORICAL DEMAND DATA — 2100

DETERMINE DEMAND PATTERN OF THE RECEIVED HISTORICAL DEMAND DATA — 2200

SELECT A SET OF MODELS BASED ON DETERMINED DEMAND PATTERN — 2300

DETERMINE FORECAST DATA USING AT LEAST ONE OF THE SELECTED MODELS — 2400

END

FIG. 2

FIG. 3

4100

HISTORICAL
DEMAND DATA

3100

CONSTANT

3200

TREND

FIG. 4

5100

HISTORICAL
DEMAND DATA → TREND
MODEL 1 → FORECAST DATA 5105

→ ERROR (Φ) 5110

5200

HISTORICAL
DEMAND DATA → TREND
MODEL 2 → FORECAST DATA 5205

→ ERROR (Φ) 5220

FIG. 5

FIG. 6

EP 1 530 144 A2

FIG. 7

EP 1 530 144 A2

START

CONFIGURE SEQUENCE OF DEMAND PATTERN TESTS — 8100

SELECT TYPE OF HISTORICAL DATA — 8150

RECEIVE HISTORICAL DATA E.G. PRODUCT/LOCATION DEMAND DATA — 8200

TEST HISTORICAL DATA BASED ON CONFIGURED SEQUENCE TO DETERMINE DEMAND PATTERN — 8250

SELECT A SET OF MODELS BASED ON DETERMINED DEMAND PATTERN — 8300

DETERMINE FORECAST DATA USING SELECTED FIRST MODEL — 8350

DETERMINE FORECAST DATA USING SELECTED SECOND MODEL — 8360

DETERMINE ERROR — 8450

DETERMINE ERROR — 8460

SELECT FORECAST DATA CORRESPONDING TO A MODEL BASED ON ERROR — 8500

PROVIDE FORECAST DATA — 8600

END

FIG. 8

# FIG. 9

```
                          START
                            │
                            ▼
                    ┌───────────────┐
      9100          │      IS       │
                    │  HISTORICAL   │     NO
                    │    DEMAND     │──────────►
                    │   SEASONAL?   │
                    └───────────────┘
                            │ YES
                            ▼
      9200   ┌──────────────────────────┐
             │   DETERMINE, FOR         │
             │   EACH OF THE FIRST      │
             │   SET OF MODELS,         │
             │   FORECAST DATA          │
             │   AND AN ERROR           │
             └──────────────────────────┘
                            │
                            ▼
      9300   ┌──────────────────────────┐
             │        SELECT            │
             │   FORECAST DATA          │
             │   WITH LEAST             │
             │     ERROR                │
             └──────────────────────────┘
                            │
                            ▼
                          END
```

9110 — IS HISTORICAL DEMAND TREND? — NO

9210 — DETERMINE, FOR EACH OF THE SECOND SET OF MODELS, FORECAST DATA AND AN ERROR

9310 — SELECT FORECAST DATA WITH LEAST ERROR

9120 — IS HISTORICAL DEMAND SPORADIC? — NO

9220 — DETERMINE, FOR EACH OF THE THIRD SET OF MODELS, FORECAST DATA AND AN ERROR

9320 — SELECT FORECAST DATA WITH LEAST ERROR

9230 — DETERMINE FORECAST DATA USING A DEFAULT MODEL(S)

END